(19) Europäisches Patentamt
European Patent Office
Office européen des brevets

(11) **EP 3 461 053 A1**

(12) **EUROPEAN PATENT APPLICATION**

(43) Date of publication:
**27.03.2019 Bulletin 2019/13**

(51) Int Cl.:
***H04L 9/00*** (2006.01)　　　***H04L 9/32*** (2006.01)

(21) Application number: **17192193.5**

(22) Date of filing: **20.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nagravision S.A.**
**1033 Cheseaux-sur-Lausanne (CH)**

(72) Inventors:
 • **VILLEGAS, Karine**
 **1034 Boussens (CH)**
 • **PELISSIER, Sylvain**
 **1004 Lausanne (CH)**
 • **ROMAILLER, Yolan**
 **1020 Renens (CH)**

(74) Representative: **Hoyng Rokh Monegier LLP**
**Rembrandt Tower, 31st Floor**
**Amstelplein 1**
**1096 HA Amsterdam (NL)**

(54) **FAULT ATTACKS COUNTER-MEASURES FOR EDDSA**

(57)　　A method for obtaining a public-key digital signature for a data message (103) based on EdDSA, wherein the signature comprises a first data component (124) and a second data component (170). The method comprises receiving the first data component, a public key (114), a secret-integer (112), a secret-hash (122) and the data message, the first data component being an intermediate result of the EdDSA obtained from the secret-hash and the data message, wherein the secret-integer is derived from a part of a EdDSA private key (101). In different implementations, a first hash (141) and a second hash (151) are computed based on the first data component, the public key and the data message. The second data component is computed based on the first and second hash, the secret-integer, the secret-hash and a random value (161). The second data component is correct only if the first and second hashes are identical.

FIG.1

EP 3 461 053 A1

**Description**

TECHNICAL FIELD

The present disclosure relates to a computer-implemented method for obtaining a public-key digital signature for a data message based on an Edwards-curve Digital Signature Algorithm. The disclosure further relates to a data processing device, a computer program product and a computer-readable non-transitory storage medium.

BACKGROUND ART

A digital signature is a mathematical scheme for demonstrating the authenticity of digital messages or documents. A valid digital signature gives a recipient reason to believe that the message was created by a known sender (authentication), that the sender cannot deny having sent the message (non-repudiation), and that the message was not altered in transit (integrity). Digital signatures are a standard element of most cryptographic protocol suites, and are commonly used for software distribution, financial transactions, contract management software, and in other cases where it is important to detect forgery or tampering.

A digital signature scheme typically includes a key generation algorithm, a signing algorithm and a signature verifying algorithm. The key generation algorithm may select a private key uniformly at random from a set of possible private keys and outputs the private key and a corresponding public key. The signing algorithm may produce a digital signature for a data message based on the private key. The signature verifying algorithm may accept or reject a data message's claim to authenticity based on the data message, the public key and the signature.

It is known that Elliptic Curve Cryptography (ECC) can be used to build digital signature algorithms with a smaller key size than the Digital Signature Algorithm (DSA) with the same level of security. The security of such algorithms is generally based on the Discrete Logarithm Problem (DLP). Currently the best known algorithms to solve this DLP over elliptic curves are less efficient than ones over finite fields. This allowed the fast adoption of ECC to provide security in embedded ecosystems where resources are constrained.

EdDSA can be used to perform fast public-key digital signatures as a replacement for the Elliptic Curve Digital Signature Algorithm (ECDSA).

EdDSA is implemented in many products and libraries, such as OpenSSH. It was also recently defined in RFC 8032.

EdDSA is known to have higher performance compared to ECDSA notably because of its existing straightforward, secure implementations with neither branch nor lookup operations depending on the secret values being performed during a signature.

These properties thwart many side-channel attacks. Nevertheless, it has been found that a single-fault attack against EdDSA can recover enough private key material to forge valid signatures for any message. With a single fault, it is possible to retrieve the long term private key and then forge valid signatures for any message.

It is an aim of the disclosure to make the EdDSA signature algorithm and its implementations more resistant to fault attacks.

SUMMARY

The disclosure provides a solution for making the EdDSA signature algorithm more resistant to fault attacks.

According to an aspect of the disclosure, a computer-implemented method is proposed for obtaining a public-key digital signature for a data message based on an EdDSA algorithm, wherein the public-key digital signature comprises a first data component and a second data component. The method can comprise receiving the first data component, a public key, a secret-integer, a secret-hash and the data message. The first data component can be an intermediate result of the EdDSA obtained from the secret-hash and the data message. The secret-integer can be derived from a part of a EdDSA private key. Typically, the derivation of the secret-integer uses a hash function and may further include clamping as defined in RFC8032. The secret-hash can be derived from a part of EdDSA private key and the data message. The method can further comprise computing a first hash based on the first data component, the public key and the data message. The method can further comprise computing a second hash based on the first data component, the public key and the data message. The method can further comprise computing the second data component based on the first hash, the second hash, the secret-integer, the secret-hash and a random value. The outcome of the computing of the second data component can be correct only if the first hash and the second hash are identical.

Advantageously, the calculation of the two hashes and computing the second data component of the signature based on these two hashes makes it very difficult to perform fault attacks on the EdDSA algorithm and obtain a valid signature.

In an embodiment, the computing of the first hash and the computing of the second hash can be implemented and/or coded differently using hardware and/or software means. Hence, it becomes increasingly difficult to perform fault attacks on the EdDSA algorithm, knowing that the computation results of the hashes should be the same for obtaining the second data component of the signature.

In an embodiment, the random value can change with each computation of the second data component. This randomizes each computation of the signature to increase the security of the EdDSA algorithm.

In an embodiment, the second data component can be computed using the following formula: $S = (r + h_1 + (a - r_i).h_1 + (r_i - 1).h_2)$ mod $\ell$, wherein "$S$" is the second data component, "$h_1$" is the first hash, "$h_2$" is the second hash, "$r_i$" is the random value, "$a$" is the secret-integer, "$r$" is the secret-hash, and "$\ell$" is the curve order of the Edwards-curve as defined in the EdDSA standard.

In an embodiment, one or more further hashes can be computed based on the first data component, the public key and the data message. In another embodiment, it is possible to add more than one random values, as long as the introduced randomness cancels itself in the subsequent computations.

The second data component can be computed further based on the one or more further hashes. The outcome of the computing of the second data component can be correct only if the first hash, the second hash and the one or more further hashes are identical.

According to an aspect of the disclosure, a data processing device is proposed. The device can comprise a processor that is configured to perform one or more of the steps of the above described method. It will be well understood that this is not a limited example, and an integrated circuit can for example be used to implement the method.

According to an aspect of the disclosure, a computer program product is proposed. The computer program product can be implemented on a computer-readable non-transitory storage medium. The computer program product can comprise computer executable instructions which, when executed by a processor, cause the processor to carry out one or more of the steps of the above described method.

According to an aspect of the disclosure, a computer-readable non-transitory storage medium is proposed, comprising computer executable instructions which, when executed by a processor, cause the processor to carry out one or more of the steps of the above described method.

The wording first, second, third and fourth as used in the claims is not intended to indicate any particular order. This wording is used to label different elements for distinguishing the elements.

Hereinafter, embodiments of the disclosure will be described in further detail. It should be appreciated, however, that these embodiments may not be construed as limiting the scope of protection for the present disclosure.

BRIEF DESCRIPTION OF DRAWINGS

Embodiments will now be described, by way of example only, with reference to the accompanying schematic drawings in which corresponding reference symbols indicate corresponding parts, and in which:

FIG. 1 shows a flow diagram of an exemplary EdDSA implementation according to an aspect of the disclosure; and
FIG. 2 is an abstract representation of an exemplary cryptographic device 1 according to an aspect of the disclosure.

The figures are meant for illustrative purposes only, and do not serve as restriction of the scope or the protection as laid down by the claims.

DESCRIPTION OF EMBODIMENTS

EdDSA is a public-key signature algorithm similar to ECDSA. In RFC 8032 EdDSA is defined for two twisted Edwards curves edwards25519 and edwards448; nevertheless EdDSA may be instantiated over other curves.

EdDSA uses a private key $k$ that is $b$-bits long and a hash function $H$ that produces a $2b$-bits output. One common instance is to use SHA-512 for $b = 256$ bits. The secret-integer $a$ is determined from $H(k) = (h_0, h_1, ..., h_{2b-1})$ with:

$$a = 2^{b-2} + \sum_{3 \leq i \leq b-3} 2^i\, h_i$$

The public key $A$ is then computed from the base point $B \neq (0, 1)$ of order $\ell$, chosen as per the curve specifications or peers agreement, such that $A = a \cdot B$. In practice the public key and the signatures may be output according to the encoding defined in RFC 8032.

The signature $(\underline{R}, S)$ of a message $M$ is typically computed according to the following Algorithm 1 (where the notation $\underline{R}$ corresponds to the value $(y_R \| \text{bit sign of } x_R)$ constructed from $R$ coordinates).

---

Algorithm 1: EdDSA Signature

---

Require: $M$, $(h_0, h_1, ..., h_{2b-1})$, $B$ and $A$
1: $a \leftarrow 2^{b-2} + \sum_{3 \leq i \leq b-3} 2^i h_i$
2: $h \leftarrow H(h_b,..., h_{2b-1}, M)$
3: $r \leftarrow h \bmod \ell$
4: $R \leftarrow r \cdot B$
5: $h \leftarrow H(\underline{R}, \underline{A}, M)$
6: $S \leftarrow (r + ah) \bmod \ell$
7: return $(\underline{R}, S)$

---

Amongst its differences from ECDSA, the signature computation following Algorithm 1 is deterministic, i.e., for a given message $M$, if multiple signatures are computed they will all be identical.

A signature may be considered valid if from the parsing of $\underline{R}$, it can be checked that $R$ is an element of $E$, $S$ is an element of $\{0, 1, ..., \ell-1\}$ and the following equation holds in E:

$$8S \cdot B = 8 \cdot R + 8H(\underline{R}, \underline{A}, M) \cdot A$$

Herein, verification without the cofactor 8 is a stronger way to verify a signature.

The principle of fault attacks is to disturb the normal behavior of a device making it output erroneous results or bypass certain operations. If the fault happens during the computation of sensitive operations, the erroneous outputs may be used to recover sensitive information.

An attack can for example be based on faulting operation 5 of Algorithm 1 during the computation of the signature. As long as the output of the hash is faulted and changed to a value $h' \neq h$ then the faulty signature will be $(\underline{R}, S')$, i.e. as soon as the second part of the signature is changed. The value of $a$ can be then recovered with:

$$a = (S - S')(h - h')^{-1} \bmod \ell$$

The value of $h$ can be computed from $R, A$ and $M$ which are known, however, the value $h'$ has to be known or guessed. This limitation can be overcome if the fault model is characterized properly and the faulted value can be guessed in a post-processing phase. For example, if the fault model is a random byte e that is an element of $\{1, 2, ..., 255\}$ injected at a random offset $i$ after the hash computation, i.e. $h' = 2^{8i}e \oplus h$. For example, $i$ is an element of $\{0, 1, ..., 31\}$ for edwards25519 and $i$ is an element of $\{0, 1, ..., 57\}$ for edwards448. In the first case, all the $255 \cdot 32 = 8160$ possibilities can be tested for $h'$ until the computation of $a \cdot B$ matches the public key value $A$.

Even if the secret-integer $a$ is known, it remains impossible to compute the secret-hash $r = H(h_b, ..., h_{2b-1}, M)$ for a new message $M$ since the values $h_b, ..., h_{2b-1}$ are not known. However, by selecting the secret-hash $r$ as a random number, and computing a new $(\underline{R}, S)$ similarly for any message $M$, we have:

$$8S \cdot B = 8(r + H(\underline{R}, \underline{A}, M).a) \cdot B = 8 \cdot R + 8H(\underline{R}, \underline{A}, M).a \cdot B = 8 \cdot R + 8H(\underline{R}, \underline{A}, M) \cdot A$$

The verification equation still holds. Thus it is possible to forge valid signatures for any message, since a verifier does not know the secret-hash $r$.

To overcome the above weakness and sensitivity to fault attacks, in an embodiment, $S$ may be computed in a way which would prevent faults located in both the hash and the message to allow the recovery of the secret-integer $a$.

Hereto, steps 5-7 of Algorithm 1 may be replaced by the following three steps.

Step 1) Compute $h_1 = H(\underline{R}, \underline{A}, M)$ with a first implementation.
Step 2) Compute $h_2 = H(\underline{R}, \underline{A}, M)$ with a second implementation.
Herein the first and second implementation are different implementations. The first implementation is for example a hardware implementation, while the second implementation is a software implementation. Alternatively, two different software implementations are used. The two operations may also be implemented with two different hardware implementations. Preferably the two implementations run in parallel, but it is possible to perform these implementations in series.

Step 3) Compute $S = (r + h_1 + (a - r_i).h_1 + (r_i - 1).h_2) \bmod \ell$

Herein, $r_i$ is a random $b$-bit number, changed at each signature computation.

If $h_1 = h_2 = h$, the signature part $S$ will be obtained as $S = r + ah \bmod \ell$

If $h_1 \neq h_2$, and a fault occurred on $h_1$, then the following is true:

$$(S - S') = (r + h + (a - r_0).h + (r_0 - 1)h)$$
$$- (r + h'_1 + (a - r_1).h'_1 + (r_1 - 1).h)$$
$$= h - h'_1 + ah - ah'_1 - r_1 h + r_1 h'_1$$
$$= (a + 1 - r_1).(h - h'_1) \bmod \ell$$

Thus, the introduction of the random $r_1$ hinders the recovery of $a$ in case $h_1 \neq h_2$, and a fault occurred on $h_1$.

If $h_1 \neq h_2$, and a fault occurred on $h_2$, then the following is true:

$$(S - S') = (r + h + (a - r_0)h + (r_0 - 1)h)$$
$$- (r + h + (a - r_1)h + (r_1 - 1)h'_2)$$
$$= r_1 h - h - r_1 h'_2 + h'_2$$
$$= (r_1 - 1)(h - h'_2) \bmod \ell$$

Thus, there is no link with the secret-integer $a$ at all in case $h_1 \neq h_2$, and a fault occurred on $h_2$.

The replacement steps of Algorithm 1 prevent faults in $h_1$ or $h_2$ from outputting a value which leaks the actual value of $a$, except if two same faults are performed on both $h_1$ and $h_2$. The latter is considered very difficult if not impossible because of the two implementations wherein $h_1$ and $h_2$ are computed. This is especially true if both implementations differ.

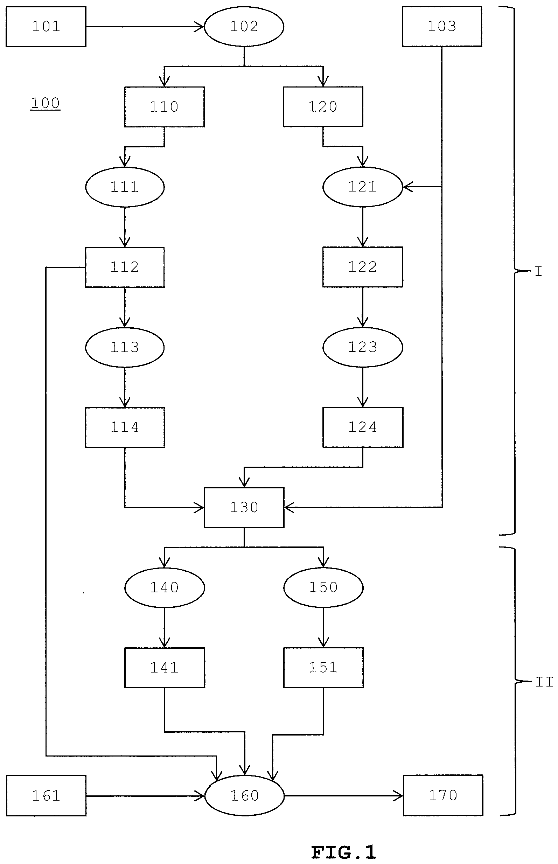

FIG. 1 shows an exemplary flow chart of an improved EdDSA implementation 100 according to an aspect of the disclosure, with the following flow chart elements:

101: Private key = $k$ (b bits)
102: Hash = $H(x)$ (2b bits)
103: Message = $M$
110: Left half = $H[0:b-1]$ (b bits)
111: Clamp as per RFC8032
112: Secret-integer = $a$ (b bits)
113: Basepoint multiplication and point encoding
114: Public key = $A$ (b bits)
120: Right half = $H[b:2b]$ (b bits)
121: Hash = $H(x)$ (2b bits)
122: Secret-hash = $r$ (2b bits)
123: Basepoint multiplication and point encoding
124: R part of the signature = $R$ (b bits)
130: Final hash input = $R, A, M$
140: Compute $h_1 = H(R, A, M)$
141: Final hash = $h_1$ (2b bits)
150: Compute $h_2 = H(R, A, M)$
151: Final hash = $h_2$ (2b bits)
160: Compute $S = (r + h_1 + (a - r_i).h_1 + (r_i - 1).h_2) \bmod \ell$
161: Random value = $r_i$ (at least b bits)
170: S part of the signature = $S$ (b bits)

The variables and operations used in FIG. 1 correspond with the variables and operations of the above described examples.

In FIG. 1, the upper part of the implementation depicted "I" is similar to known EdDSA algorithms. The bottom part of the implementation depicted "II" includes the improvements to the EdDSA algorithm, wherein two hashes $h_1$ and

$h_2$ may be computed in two parallel implementations in accordance with step 1 and step 2 described above. The thus calculated hashes $h_1$ and $h_2$ are input, together with a randomly chosen value $r_i$, into the computational step of calculating the signature component $S$, in accordance with the above described step 3.

Note that the other signature component $\underline{R}$ is an intermediate result of the EdDSA algorithm, as shown in FIG. 1 in step 124.

The resulting signature of the improved EdDSA algorithm is ($\underline{R}$, $S$).

In an alternative embodiment, more than two hashes may be calculated in different implementations. The computation of the signature component $S$ may then be based on these more than two hashes and produce a valid signature if all computed hashes are the same.

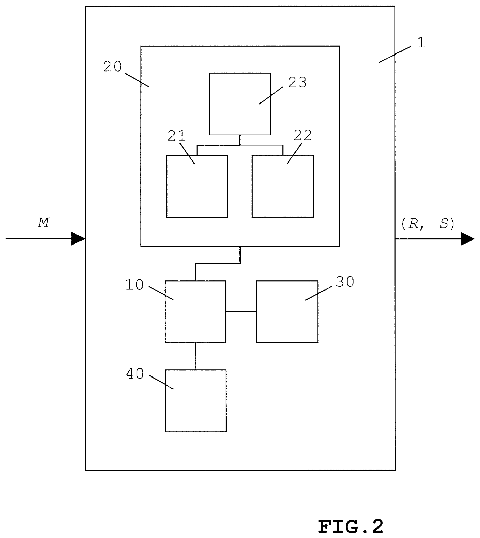

FIG. 2 is an abstract representation of an exemplary cryptographic device 1. The device 1 may include a processor 10 for executing computer executable instructions 20. The computer executable instructions 20 may be stored on a computer-readable non-transitory storage medium. The device 1 may further include a random number generator 30 for generating a random number $r_i$ for each signature computation. The device 1 may further include a memory 40 for storing a private key $k$.

A message $M$ may be input to the device 1, for which a public-key digital signature ($\underline{R}$, $S$) is to be obtained. Output of the device 1 may be the obtained signature ($\underline{R}$, $S$).

The computer executable instructions 20 form the improved EdDSA algorithm and includes a first implementation 21 for calculating the first hash $h_1$ and a second implementation 22 for calculating the second hash $h_2$. The resulting hashes are used to compute the second data component $S$ of the signature. The first data component $\underline{R}$ of the signature is an intermediate result of the EdDSA algorithm, as shown in FIG. 1. During computation, random number $r_i$ and private key $k$ are input to the algorithm at the required steps of the algorithm.

One or more embodiments of the disclosure may be implemented as a computer program product for use with a computer system. The program(s) of the program product may define functions of the embodiments (including the methods described herein) and can be contained on a variety of computer-readable storage media. The computer-readable storage media may be non-transitory storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information may be permanently stored; and (ii) writable storage media (e.g., hard disk drive or any type of solid-state random-access semiconductor memory, flash memory) on which alterable information may be stored.

**Claims**

1. A computer-implemented method for obtaining a public-key digital signature for a data message (103) based on an Edwards-curve Digital Signature Algorithm (hereinafter: EdDSA), wherein the public-key digital signature comprises a first data component (124) and a second data component (170), the method comprising:

    receiving the first data component (124), a public key (114), a secret-integer (112), a secret-hash (122) and the data message (103), wherein the first data component (124) is an intermediate result of the EdDSA obtained from the secret-hash (122) and the data message (103), wherein the secret-integer (112) is derived from a part of a EdDSA private key (101);
    computing a first hash (141) based on the first data component (124), the public key (114) and the data message (103);
    computing a second hash (151) based on the first data component (124), the public key (114) and the data message (103); and
    computing the second data component (170) based on the first hash (141), the second hash (151), the secret-integer (112), the secret-hash (122) and a random value (161),

    wherein the outcome of the computing of the second data component (170) is correct only if the first hash (141) and the second hash (151) are identical.

2. The method according to claim 1, wherein the computing of the first hash (141) and the computing of the second hash (151) are implemented and/or coded differently using hardware and/or software means.

3. The method according to claim 1 or 2, wherein the random value (161) changes with each computation of the second data component (170).

4. The method according to any of the preceding claims, wherein the second data component (170) is computed using the following formula:

$$S = (r + h_1 + (a - r_i).h_1 + (r_i - 1).h_2) \bmod \ell$$

wherein "$S$" is the second data component (170), "$h_1$" is the first hash (141), "$h_2$" is the second hash (151), "$r_i$" is the random value (161), "$a$" is the secret-integer (112), "$r$" is the secret-hash (122), and "$\ell$" is a curve order as defined in by EdDSA.

5. The method according to any one of the preceding claims, wherein one or more further hashes are computed based on the first data component (124), the public key (114) and the data message (103), wherein the second data component (170) is computed further based on the one or more further hashes, and wherein the outcome of the computing of the second data component (170) is correct only if the first hash (141), the second hash (151) and the one or more further hashes are identical.

6. A data processing device (1) comprising a processor (2) configured to perform the steps of the method according to any one of the claims 1-5.

7. A data processing device (1) comprising an integrated circuit configured to perform the steps of the method according to any one of the claims 1-5.

8. A computer program product, implemented on a computer-readable non-transitory storage medium, the computer program product comprising computer executable instructions which, when executed by a processor, cause the processor to carry out the steps of the method according to any one of the claims 1-5.

9. A computer-readable non-transitory storage medium comprising computer executable instructions which, when executed by a processor, cause the processor to carry out the steps of the method according to any one of the claims 1-5.

FIG.1

FIG.2

Europäisches
Patentamt
European
Patent Office
Office européen
des brevets

## EUROPEAN SEARCH REPORT

Application Number

EP 17 19 2193

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Ed25519 leaks private key if public key is incorrect . Issue #170 . jedisct1/libsodium . GitHub", , 30 October 2016 (2016-10-30), XP055458434, Retrieved from the Internet: URL:https://github.com/jedisct1/libsodium/issues/170 [retrieved on 2018-03-12] * top entry * | 1-9 | INV. H04L9/00 H04L9/32 |
| A | US 2015/288524 A1 (JAFFE JOSHUA M [US]) 8 October 2015 (2015-10-08) * paragraph [0005] * | 1-9 | |
| A | MARGAUX DUGARDIN ET AL: "Using Modular Extension to Provably Protect Edwards Curves Against Fault Attacks", INTERNATIONAL ASSOCIATION FOR CRYPTOLOGIC RESEARCH,, vol. 20160814:122545, 14 August 2016 (2016-08-14), pages 1-18, XP061021466, [retrieved on 2016-08-14] * figure 1 * | 1-9 | |

TECHNICAL FIELDS
SEARCHED    (IPC)

H04L

The present search report has been drawn up for all claims

| Place of search | Date of completion of the search | Examiner |
|---|---|---|
| Munich | 13 March 2018 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 2193

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2018

| Patent document cited in search report | Publication date | Patent family member(s) | Publication date |
|---|---|---|---|
| US 2015288524 A1 | 08-10-2015 | EP 2918037 A1<br>JP 2015534419 A<br>US 2015288524 A1<br>WO 2014075000 A1 | 16-09-2015<br>26-11-2015<br>08-10-2015<br>15-05-2014 |

EPO FORM P0459

For more details about this annex : see Official Journal of the European Patent Office, No. 12/82